# EUROPÄISCHE PATENTSCHRIFT

(11) **EP 3 763 194 B1**
(45) Veröffentlichungstag und Bekanntmachung des Hinweises auf die Patenterteilung: **11.09.2024**
(21) Anmeldenummer: 20185128.4
(22) Anmeldetag: 10.07.2020
(51) Int. Cl.: A01D 57/20, A01D 84/00, B65G 23/36

(54) **QUERFÖRDERER EINER LANDWIRTSCHAFTLICHEN ERNTEMASCHINE**
TRANSVERSE CONVEYOR FOR AN AGRICULTURAL HARVESTER
CONVOYEUR TRANSVERSAL D'UNE MACHINE DE RÉCOLTE AGRICOLE

(30) Priorität: 10.07.2019 DE 102019118740
(43) Veröffentlichungstag der Anmeldung: 13.01.2021
(73) Patentinhaber: CLAAS Saulgau GmbH, 88348 Bad Saulgau (DE)
(72) Erfinder: Boll, Ulrich, 88348 Bad Saulgau (DE)

(56) Entgegenhaltungen:
- EP-A1- 0 199 299
- EP-A1- 2 042 023
- US-A1- 2005 126 153

## Beschreibung

Die Erfindung betrifft einen Querförderer einer landwirtschaftlichen Erntemaschine nach dem Oberbegriff des Anspruchs 1.

Landwirtschaftliche Erntemaschinen mit Querförderern sind aus der Praxis hinlänglich bekannt. Die Querförderer können dabei als Schneckenförderer oder auch als Bandförderer ausgeführt sein. Die hier vorliegende Erfindung betrifft einen Querförderer einer landwirtschaftlichen Erntemaschine mit einem Querförderband, der also als Bandförderer ausgebildet ist. Solche als Bandförderer ausgebildeten Querförderer kommen zum Beispiel in Mergern oder Pickup-Schwadern oder auch in Mähwerken zum Einsatz.

Aus US 2005/0126153 A1 ist eine landwirtschaftliche Maschine mit einem Querförderer bekannt, der Erntegut auf einem Querförderband in einer quer zur Fortbewegungsrichtung der Erntemaschine verlaufenden Förderrichtung fördert. Das Querförderband ist an seitlichen Umlenkrollen geführt, wobei einer der Umlenkrollen ein Hydraulikmotor als Antrieb zugeordnet ist.

Bei aus der Praxis bekannten Querförderern, die ein Querförderband aufweisen, welches an seitlichen Umlenkrollen geführt ist, bereitet bislang der ordnungsgemäße Antrieb des Querförderbands Schwierigkeiten. Insbesondere bei relativ langen Querförderbändern, bei welchen also der Abstand zwischen den Umlenkrollen relativ groß ist, stellt der ordnungsgemäße Antrieb des Querförderbands ein Problem dar. Es besteht daher Bedarf an einem neuartigen Querförderer, der besser angetrieben werden kann.

Hiervon ausgehend liegt der vorliegenden Erfindung die Aufgabe zugrunde, einen neuartigen Querförderer einer landwirtschaftlichen Erntemaschine zu schaffen.

Diese Aufgabe wird durch einen Querförderer einer landwirtschaftlichen Erntemaschine nach Anspruch 1 gelöst.

Erfindungsgemäß ist jeder der seitlichen Umlenkrollen jeweils eine Antriebseinheit zugordnet, mit Hilfe derer das Querförderband antreibbar ist. Erfindungsgemäß wird also vorgeschlagen, dass beiden Umlenkrollen des Querförderers jeweils eine Antriebseinheit zugeordnet ist, mithilfe derer das Querförderband angetrieben werden kann.

Das Verwenden einer Antriebseinheit je Umlenkrolle verfügt über eine Vielzahl von Vorteilen. So kann in beiden möglichen Querförderrichtungen ein guter Antrieb des Querförderbands bereitgestellt werden. Ein Durchhängen eines sogenannten Lostrum kann auch ohne entsprechende Spanneinrichtung verhindert werden. Ferner kann im Bereich jeder Umlenkrolle eine relativ kleine Antriebseinheit genutzt werden, wodurch sich Bauraum- und Kostenvorteile realisieren lassen.

Nach einer vorteilhaften Weiterbildung ist eine Drehrichtung der Antriebseinheiten umkehrbar. Hiermit kann in beiden möglichen Querförderrichtungen des Querförderers ein ordnungsgemäßer Antrieb des Querförderbands gewährleistet werden.

Gemäß der Erfindung dient ein erster oder oberer Trum des Querförderbands als Fördertrum und ein zweiter oder unterer Trum des Querförderbands als Lostrum, wobei sowohl der Fördertrum als auch der Lostrum in beiden möglichen Förderrichtungen des Querförderers von einer ersten Antriebseinheit gezogen und von einer zweiten Antriebseinheit geschoben sind. Sowohl Fördertrum als auch Lostrum können in beiden Förderrichtungen des Querförderers bzw. Querförderbands ordnungsgemäß angetrieben und gespannt werden.

Nach einer vorteilhaften Weiterbildung weist die jeweilige Antriebseinheit einen Elektromotor und/oder Hydraulikmotor auf. Elektromotoren und Hydraulikmotoren sind als Antriebseinheiten besonders geeignet.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine perspektivische Rückansicht einer Baueinheit aus einem erfindungsgemäßen Querförderer und einem Aufnahmeorgan einer als Merger oder Pickup-Schwader ausgebildeten landwirtschaftlichen Erntemaschine;
- Fig. 2: den erfindungsgemäßen Querförderer in Draufsicht;
- Fig. 3: den erfindungsgemäßen Querförderer in Rückansicht.

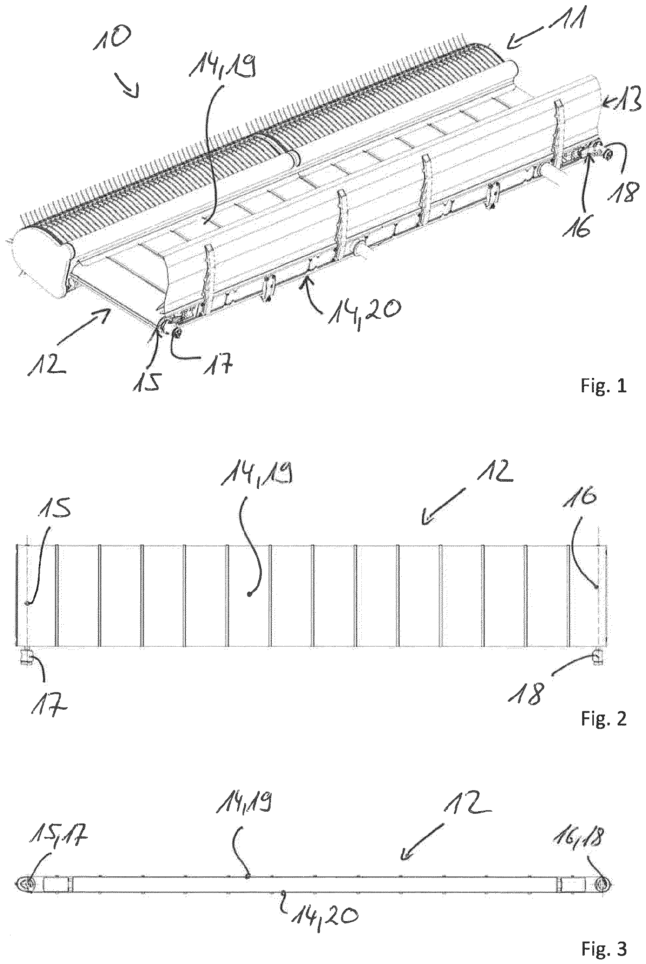

Fig. 1 zeigt eine Baueinheit 10 aus einem Aufnahmeorgan 11 und einem Querförderer 12 einer landwirtschaftlichen Erntemaschine, wobei das Aufnahmeorgan 11 als sogenannte Pickup und der Querförderer 12 als Bandförderer ausgebildet ist. Eine derartige Baueinheit 10 kommt insbesondere bei einer als Merger ausgebildeten Erntemaschine zum Einsatz, wobei ein Merger auch als Pickup-Schwader bezeichnet wird. Das Aufnahmeorgan 11 ist zu einer ersten Längsseite des Querförderers 12 angeordnet. Zu einer gegenüberliegenden zweiten Querseite des Querförderers 12 ist eine Führungseinrichtung 13 für das zu transportierende Erntegut angeordnet.

Die hier vorliegende Erfindung betrifft die Ausgestaltung des Querförderers 12, der in Fig. 2 und 3 in Alleindarstellung gezeigt ist. Der Querförderer 12 dient dem Transport von Erntegut in einer quer zur Fortbewegungsrichtung der Erntemaschine verlaufenden Förderrichtung.

Der Querförderer 12 verfügt über ein Querförderband 14, das an zwei seitlichen Umlenkrollen 15, 16 geführt ist.

Ein im jeweiligen Zustand des Querförderbands 14 erster oder oberer Trum des Querförderbands 14 wird auch als Fördertrum 19 und ein zweiter oder unterer Trum des Querförderbands 14 wird auch als Lostrum 20 bezeichnet.

Beim Transport von Erntegut mithilfe des Querförders12 wird das Querförderband 14 angetrieben und an den Umlenkrollen 15, 16 geführt.

Bei dem erfindungsgemäßen Querförderer 12 ist vorgesehen, dass jeder der beiden Umlenkrollen 15, 16 jeweils eine Antriebseinheit 17, 18 zugeordnet ist, mithilfe derer das Querförderband 14 antreibbar ist. So ist der Umlenkrolle 15 die Antriebseinheit 17 und der Umlenkrolle 16 ist die Antriebseinheit 18 zugeordnet. Bei den beiden Antriebseinheiten 17, 18 handelt es sich dabei um Antriebseinheiten, deren Drehrichtung umkehrbar ist.

Insbesondere umfasst die jeweilige Antriebseinheit 17, 18 einen Elektromotor oder auch einen Hydraulikmotor. Es können jedoch auch andere Antriebssysteme zum Antreiben der Umlenkrollen 15, 16 und damit des Querförderbands 14 zum Einsatz kommen.

Dann, wenn im Bereich beider Umlenkrollen 15, 16 jeweils eine Antriebseinheit 17, 18 vorhanden ist, und dann, wenn die Drehrichtung dieser Antriebseinheiten 17, 18 umkehrbar ist, wird in beiden möglichen Förderrichtungen des Querförderers 14 der jeweilige Fördertrum 19 sowie der jeweilige Lostrum 20 von einer ersten Antriebseinheit gezogen und von einer zweiten Antriebseinheit geschoben. Hierdurch kann gewährleistet werden, dass in beiden Förderrichtungen des Querförderers 14 sowohl der jeweilige Fördertrum 19 als auch der jeweilige Lostrum 20 gespannt ist und nicht durchhängt. Auf separate Spanneinrichtungen kann so verzichtet werden. Dies ist insbesondere dann von Vorteil, wenn der Abstand zwischen den beiden Umlenkrollen 15, 16 relativ groß und damit die Länge des Querförderbands 14 relativ lang ist.

Die Erfindung ermöglicht einen verbesserten Antrieb eines als Bandförderer ausgebildeten Querförderers 12, also des Querförderbands 14 des Querförderers 12. Das Querförderband 14 ist an zwei seitlichen Umlenkrollen 15, 16 geführt. Jeder dieser seitlichen Umlenkrollen 15, 16 ist jeweils eine Antriebseinheit 17, 18 zugeordnet. Die Drehrichtung der Antriebseinheiten 17, 18 ist umkehrbar. In beiden Förderrichtungen des Querförderbands 14 werden sowohl Fördertrum 19 als auch Lostrum 20 geschoben und gezogen.

Der erfindungsgemäße Querförderer 12 findet insbesondere bei einem Merger oder Pickup-Schwader oder auch bei einem Mähwerk Einsatz.

Die Erfindung betrifft nicht nur den Querförderer 12, sondern auch eine landwirtschaftliche Erntemaschine, die mindestens einen derartigen Querförderer 12 aufweist. Wie bereits ausgeführt, handelt es sich bei der landwirtschaftlichen Erntemaschine dabei vorzugsweise um einen Merger bzw. Pickup-Schwader oder auch um ein Mähwerk.

### Bezugszeichenliste

- 10: Baueinheit
- 11: Aufnahmeorgan
- 12: Querförderer
- 13: Führungseinrichtung
- 14: Querförderband
- 15: Umlenkrolle
- 16: Umlenkrolle
- 17: Antriebseinheit
- 18: Antriebseinheit
- 19: Fördertrum
- 20: Lostrum

## Patentansprüche

1. Querförderer (12) einer landwirtschaftlichen Erntemaschine, um Erntegut in einer quer zur Fortbewegungsrichtung der Erntemaschine verlaufenden Förderrichtung zu fördern,
mit einem Querförderband (14),
mit seitlichen Umlenkrollen (15, 16), an welchen das Querförderband (14) geführt ist, wobei
einer seitlichen Umlenkrolle (15, 16) eine Antriebseinheit (17, 18) zugeordnet ist, mit Hilfe derer das Querförderband (14) antreibbar ist, **dadurch gekennzeichnet, dass**
jeder der seitlichen Umlenkrollen (15, 16) jeweils eine Antriebseinheit (17, 18) zugeordnet ist und ein erster oder oberer Trum des Querförderbands (14) als Fördertrum (19) und ein zweiter oder unterer Trum des Querförderbands (14) als Lostrum (20) dient, wobei sowohl der Fördertrum (19) als auch der Lostrum (20) in beiden möglichen Förderrichtungen des Querförderers (14) von einer ersten Antriebseinheit (17, 18) gezogen und von einer zweiten Antriebseinheit (18, 17) geschoben sind.

2. Querförderer nach Anspruch 1, **dadurch gekennzeichnet, dass** eine Drehrichtung der Antriebseinheiten (17, 18) umkehrbar ist.

3. Querförderer nach einem der Ansprüche 1 oder 2, **dadurch gekennzeichnet, dass** die jeweilige Antriebseinheit (17, 18) einen Elektromotor aufweist.

4. Querförderer nach einem der Ansprüche 1 bis 3, **dadurch gekennzeichnet, dass** die jeweilige Antriebseinheit (17, 18) einen Hydraulikmotor aufweist.

5. Landwirtschaftliche Erntemaschine mit mindestens einem Querförderer (12) nach einem der Ansprüche 1 bis 4.

6. Landwirtschaftliche Erntemaschine nach Anspruch 5, **dadurch gekennzeichnet, dass** dieselbe ein Merger oder Pickup-Schwader ist.

7. Landwirtschaftliche Erntemaschine nach Anspruch 5, **dadurch gekennzeichnet, dass** dieselbe ein Mähwerk ist.

## Claims

1. Transverse conveyor (12) of an agricultural harvesting machine, in order to convey harvested crop in a conveying direction running transversely with respect to the direction of movement of the harvesting machine,
with a transverse conveyor belt (14),
with lateral deflecting pulleys (15, 16) on which the transverse conveyor belt (14) is guided, wherein
a lateral deflecting pulley (15, 16) is assigned a drive unit (17, 18), with the aid of which the transverse conveyor belt (14) is drivable, **characterized in that**
each of the lateral deflecting pulleys (15, 16) is assigned a respective drive unit (17, 18), and a first or upper strand of the transverse conveyor belt (14) serves as a conveying strand (19) and a second or lower strand of the transverse conveyor belt (14) serves as a return strand (20), wherein, in both possible conveying directions of the transverse conveyor (14), both the conveying strand (19) and the return strand (20) are pulled by a first drive unit (17, 18) and pushed by a second drive unit (18, 17).

2. Transverse conveyor according to Claim 1, **characterized in that** a direction of rotation of the drive units (17, 18) is reversible.

3. Transverse conveyor according to either of Claims 1 and 2, **characterized in that** the respective drive unit (17, 18) has an electric motor.

4. Transverse conveyor according to one of Claims 1 to 3, **characterized in that** the respective drive unit (17, 18) has a hydraulic motor.

5. Agricultural harvesting machine with at least one transverse conveyor (12) according to one of Claims 1 to 4.

6. Agricultural harvesting machine according to Claim 5, **characterized in that** said agricultural harvesting machine is a merger or pickup swather.

7. Agricultural harvesting machine according to Claim 5, **characterized in that** said agricultural harvesting machine is a mower unit.

## Revendications

1. Transporteur transversal (12) d'une machine de récolte agricole, pour transporter un produit récolté dans une direction de transport s'étendant transversalement à la direction de déplacement de la machine de récolte,
avec une bande transporteuse transversale (14),
avec des rouleaux de renvoi latéraux (15, 16), sur lesquels la bande transporteuse transversale (14) est guidée,
une unité d'entraînement (17, 18) étant associée à un rouleau de renvoi latéral (15, 16), à l'aide de laquelle la bande transporteuse transversale (14) peut être entraînée, **caractérisé en ce que**
une unité d'entraînement (17, 18) est associée à chacun des rouleaux de renvoi latéraux (15, 16) et un premier brin ou brin supérieur de la bande transporteuse transversale (14) sert de brin de transport (19) et un deuxième brin ou brin inférieur de la bande transporteuse transversale (14) sert de brin libre (20), le brin de transport (19) et le brin libre (20) étant tous deux tirés par une première unité d'entraînement (17, 18) et poussés par une deuxième unité d'entraînement (18, 17) dans les deux directions de transport possibles du transporteur transversal (14).

2. Transporteur transversal selon la revendication 1, **caractérisé en ce qu'**une direction de rotation des unités d'entraînement (17, 18) est réversible.

3. Transporteur transversal selon l'une quelconque des revendications 1 ou 2, **caractérisé en ce que** l'unité d'entraînement respective (17, 18) présente un moteur électrique.

4. Transporteur transversal selon l'une quelconque des revendications 1 à 3, **caractérisé en ce que** l'unité d'entraînement respective (17, 18) présente un moteur hydraulique.

5. Machine de récolte agricole avec au moins un transporteur transversal (12) selon l'une quelconque des revendications 1 à 4.

6. Machine de récolte agricole selon la revendication 5, **caractérisée en ce qu'**il s'agit d'un andaineur à regroupement ou à ramassage.

7. Machine de récolte agricole selon la revendication 5, **caractérisée en ce qu'**il s'agit d'une faucheuse.
